# EUROPEAN PATENT APPLICATION

(11) **EP 3 609 291 A1**
(43) Date of publication of application: **12.02.2020**
(21) Application number: 18831618.6
(22) Date of filing: 20.04.2018
(51) Int. Cl.: H04W 84/12, H04W 76/20, H04W 12/00

(54) **METHOD FOR RESTORING SESSION, DEVICE AND COMPUTER STORAGE MEDIUM**

(30) Priority: 11.07.2017 CN 201710562608
(71) Applicant: Huawei Technologies Co., Ltd., Longgang District Shenzhen, Guangdong 518129 (CN)
(72) Inventor: HUANG, Jisong, Shenzhen Guangdong 518129 (CN); ZHUANG, Shengen, Shenzhen Guangdong 518129 (CN)
(74) Representative: Gill Jennings & Every LLP
(86) International application number: PCT/CN2018/083831
(87) International publication number: WO 2019/011028

(57) **Abstract**

This application provides a session resumption method and apparatus, and a computer storage medium, to reduce message exchanges between a client and a server during session resumption, reduce device power consumption, further protect user privacy from being tracked, and improve security of communication between the client and the server. The method includes: setting up, by a client, a first session with a server, and storing, by the client, a first session identifier corresponding to the first session; and sending, by the client, an application message to the server, where the application message includes a current session identifier and service data, so that the server resumes the first session based on the current session identifier after receiving the application message.

## Description

This application claims priority to Chinese Patent Application 201710562608.7, filed with the Chinese Patent Office on July 11, 2017 and entitled "SESSION RESUMPTION METHOD AND APPARATUS, AND COMPUTER STORAGE MEDIUM", which is incorporated herein by reference in its entirety.

### TECHNICAL FIELD

This application relates to the communications field, and in particular, to a session resumption method and apparatus, and a computer storage medium.

### BACKGROUND

A transport layer security (TLS) protocol and a datagram transport layer security (DTLS) protocol are transport layer security protocols widely applied currently. The TLS and DTLS protocols are indistinctive in terms of key negotiation and session resumption.

When a client and a server have a handshake by using the transport layer security protocol, a dedicated session is set up. Content of the session includes important information such as a working key and an encryption algorithm that are obtained through negotiation between the client and the server. After the session is set up, each time the client and the server interact with each other by using an encrypted message, a receive end first identifies an identity of a transmit end by using an IP address and an IP port to find the corresponding session, and then performs a decryption operation. If an IP address or port of either of the two interaction parties changes, a peer end may fail to identify an identity of the other end. In this case, the two parties need to have a handshake again to set up a new session. The standard DTLS and TLS protocols provide a session resumption mechanism in which the client and the server need to perform at least five message exchanges to resume a session.

However, because of a low power consumption requirement of a device such as a narrowband internet of things (NB-IoT) device, the device stays in a deep sleep mode for most of the time and wakes up periodically to report data. In addition, it is required that service data reported by the NB-IoT device should not be eavesdropped. Therefore, the service data needs to be encrypted. When the device such as the NB-IoT device wakes up from deep sleep and reports the service data to the server, even if the session resumption mechanism of the DTLS or TLS protocol is used, the device and the server still need to perform at least five message exchanges to implement encrypted reporting of the service data. The plurality of message exchanges increase power consumption of the device, and the low power consumption requirement of the device cannot be met.

### SUMMARY

Embodiments of the present invention provide a session resumption method and apparatus, and a computer storage medium, to reduce a quantity of message transfers between a device and a server during session resumption and reduce power consumption, thereby implementing real-time communication and faster server response.

According to a first aspect, an embodiment of the present invention provides a session resumption method. The method is applicable to a device that requires low power consumption and needs to encrypt reported data, for example, an NB-IoT device. The method includes: setting up, by a client, a first session with a server, and storing, by the client, a first session identifier corresponding to the first session; and sending, by the client, an application message to the server, where the application message includes a current session identifier and service data, so that the server resumes the first session based on the current session identifier after receiving the application message.

The client sends the application message including the current session identifier and the service data (the service data herein may be encrypted service data) to the server, so that the server can find the first session based on the obtained current session identifier, that is, resume the first session. In this way, the client can complete data transmission of the service data. It can be learned that the application message including the current session identifier and the service data is sent, so that the session can be resumed through only one message transfer to transmit data. In comparison with common session resumption that requires at least five message transfers, this solution reduces a quantity of message transfers and reduces power consumption, thereby implementing real-time communication and faster server response.

According to the first aspect, in some implementations, the setting up, by a client, a first session with a server includes: sending, by the client, a first client handshake message to the server, where the first client handshake message includes an extended field; and receiving, by the client, a first server handshake message returned by the server, where the first server handshake message includes the first session identifier and an extended field.

Specifically, the first client handshake message may be obtained by adding an extended field to a DTLS or TLS handshake message, to indicate that the client supports the session resumption method provided in this application. In this implementation, that the client supports the session resumption method provided in this application can be indicated without increasing a quantity of message exchanges required for setting up the first session between the client and the server. If the message returned by the server also carries the extended field, it indicates that the server also supports the session resumption method provided in this application.

According to any one of the first aspect or the foregoing implementations, in some implementations, after the client sets up the first session with the server, the client determines, based on the extended field in the first server handshake message, to set a flag bit in a session context of the first session.

Specifically, if the first server handshake message includes the extended field, the client determines to set the flag bit in the session context of the first session. When the client needs to send a message to the server by using the session resumption method provided in this application, the client may determine, based on the flag bit, that both the client and the server support the session resumption method provided in this application. After the client sets a flag in the session context of the first session, the client may directly use, after finding the flag bit, the session resumption method provided in this application to resume the first session, without having to acknowledge with the server whether both parties support the session resumption method provided in this application. This reduces a quantity of message transfers between the client and the server.

According to any one of the first aspect or the foregoing implementations, in some implementations, before the sending, by the client, an application message to the server, the method further includes: searching for, by the client, the flag bit, and determining, based on the flag bit, to send the application message to the server, where the current session identifier in the application message is the first session identifier in this case.

In this implementation, if the client needs to send the service data, the client first searches for the flag bit, and after determining that both the client and the server support the session resumption method provided in this application, the client determines to send the application message to the server. In this case, the current session identifier is still a session identifier of the first session. Therefore, the current session identifier is the first session identifier.

In another implementation, alternatively, if the client needs to send the service data, the client may directly determine, based on the extended field in the first server handshake message, to send the application message to the server.

According to any one of the first aspect or the foregoing implementations, in some implementations, before the sending, by the client, an application message to the server, the method may further include: sending, by the client, a first request message to the server; and receiving, by the client, a first update message sent by the server according to the first request message, where the first update message includes a second session identifier, and the second session identifier is the current session identifier.

In this implementation, before the sending, by the client, a first request message to the server, the method may further include: setting up, by the client, the first session with the server according to some of the foregoing implementations, and determining, by the client based on the extended field in the first server handshake message according to some of the foregoing implementations, to set the flag bit in the session context of the first session.

In this implementation, the second session identifier received by the client is used to update the first session identifier. The first session identifier is updated, so that user privacy can be protected from being tracked, thereby improving security of message exchange between the client and the server.

According to any one of the first aspect or the foregoing implementations, in some implementations, before the sending, by the client, a first request message to the server, the method may further include: searching for, by the client, the flag bit, and determining, based on the flag bit, to send the first request message to the server.

In this implementation, the client first searches for the flag bit, and after determining that both the client and the server support the session resumption method provided in this embodiment, the client determines to send the first request message to the server.

In another implementation, when receiving the first server handshake message that carries the extended field, the client may send the first request message to the server based on the extended field in the first server handshake message.

According to any one of the first aspect or the foregoing implementations, in some implementations, the extended field in the first server handshake message may be used to indicate an effective time of the first session identifier.

In this implementation, the extended field in the first server handshake message has two functions: One function is that the extended field may indicate that both the client and the server support the session resumption method provided in this application; and the client may determine, based on the extended field, to set the flag bit in the session context of the first session. The other function is that the extended field is used to indicate the effective time of the first session identifier.

In another implementation, alternatively, the server may add another extended field to the first server handshake message, to indicate the effective time of the first session identifier.

According to any one of the first aspect or the foregoing implementations, in some implementations, the client further stores the effective time of the first session identifier, and the client sends the first request message to the server within the effective time of the first session identifier. A periodic session identifier update can be implemented by sending the first request message to the server within the effective time of the first session identifier. Privacy is easily tracked if a same session identifier is used for a long time. The periodic session identifier update can improve security of communication between the client and the server and protect the user privacy from being tracked.

According to any one of the first aspect or the foregoing implementations, in some implementations, the first update message may further include an effective time of the second session identifier. The client may send a request message to the server within the effective time of the second session identifier to update the second session identifier, thereby implementing another periodic session identifier update.

According to any one of the first aspect or the foregoing implementations, in some implementations, after the client receives the first update message sent by the server according to the first request message, the client updates the first session identifier corresponding to the first session to the second session identifier.

According to a second aspect, an embodiment of the present invention provides a session resumption method. The method is applicable to a server. The method includes:
setting up, by the server, a first session with a client, and storing, by the server, a first session identifier corresponding to the first session; receiving, by the server, an application message sent by the client, where the application message includes a current session identifier and service data; and resuming, by the server, the first session based on the current session identifier.

After the server receives the application message including the current session identifier and the service data (the service data herein may be encrypted service data), the server can find the first session based on the obtained current session identifier, that is, resume the first session, so as to decrypt the service data. It can be learned that the session can be resumed for transmitting the service data, after the server receives the application message including the current session identifier and the service data, that is, through only one message transfer. In comparison with common session resumption that requires at least five message transfers, this solution reduces a quantity of message transfers and reduces power consumption, thereby implementing real-time communication and faster server response.

According to the second aspect, in some implementations, the setting up, by the server, a first session with a client includes: receiving, by the server, a first client handshake message sent by the client, where the first client handshake message includes an extended field; and sending, by the server, a first server handshake message to the client, where the first server handshake message includes the first session identifier and an extended field.

Specifically, the first server handshake message may be obtained by adding an extended field to a DTLS or TLS handshake session, to indicate that the server supports the session resumption method provided in this application. In this implementation, that the server supports the session resumption method provided in this application can be indicated without increasing a quantity of message exchanges required for setting up the first session between the server and the client.

According to any one of the second aspect or the foregoing implementations, in some implementations, the extended field included in the first server handshake message may be used to instruct the client to set a flag bit in a context of the first session.

Specifically, if the first server handshake message includes the extended field, the client is instructed to set the flag bit in the session context of the first session. When the client needs to send a message to the server by using the session resumption method provided in this application, the client may determine, based on the flag bit, that both the client and the server support the session resumption method provided in this implementation. After the client sets a flag in the session context of the first session, the client may directly use, after finding the flag bit, the session resumption method provided in this application to resume the first session, without having to acknowledge with the server whether both parties support the session resumption method provided in this application. This reduces a quantity of message transfers between the client and the server.

According to any one of the second aspect or the foregoing implementations, in some implementations, before the receiving, by the server, an application message sent by the client, the method may further include: receiving, by the server, a first request message sent by the client; generating, by the server, a second session identifier according to the first request message, and updating the stored first session identifier corresponding to the first session to the second session identifier, where the second session identifier is the current session identifier; and sending, by the server, a first update message to the client, where the first update message includes the second session identifier.

In this implementation, before the receiving, by the server, a first request message sent by the client, the method may further include: setting up, by the server, the first session with the client according to some of the foregoing implementations, and instructing, by using the extended field included in the first server handshake message, the client to set the flag bit in the context of the first session.

In this implementation, the first request message has been encrypted and includes the first session identifier in plaintext. After receiving the first request message, the server decrypts the first request message after finding the first session based on the first session identifier, and then generates the second session identifier corresponding to the first session, to replace the first session identifier. In this case, the current session identifier is the second session identifier. The server sends the first update message including the second session identifier to the client, so that the client can complete a session identifier update subsequently. This can protect user privacy from being tracked, thereby improving security of message exchange between the client and the server.

According to any one of the second aspect or the foregoing implementations, in some implementations, the extended field in the first server handshake message may be used to indicate an effective time of the first session identifier.

In this implementation, the extended field in the first server handshake message has two functions: One function is that the extended field may indicate that both the client and the server support the session resumption method provided in this application; and the client may determine, based on the extended field, to set the flag bit in the session context of the first session. The other function is that the extended field is used to indicate the effective time of the first session identifier.

In another implementation, alternatively, the server may add another extended field to the first server handshake message, to indicate the effective time of the first session identifier.

According to any one of the second aspect or the foregoing implementations, in some implementations, the receiving, by the server, a first request message sent by the client includes: receiving, by the server, the first request message sent by the client within the effective time of the first session identifier. A periodic session identifier update can be implemented by the server by receiving the first request message sent by the client within the effective time of the first session identifier. Privacy is easily tracked if a same session identifier is used for a long time. The periodic session identifier update can improve security of communication between the client and the server and protect the user privacy from being tracked.

According to any one of the second aspect or the foregoing implementations, in some implementations, the first update message further includes an effective time of the second session identifier. The client may send a request message to the server within the effective time of the second session identifier to update the second session identifier, thereby implementing another periodic session identifier update.

According to any one of the second aspect or the foregoing implementations, in some implementations, the resuming, by the server, the first session based on the current session identifier includes: finding, by the server, the corresponding first session based on the received current session identifier, and processing the service data in the application message based on information corresponding to the first session.

In this implementation, the current session identifier is a session identifier currently corresponding to the first session. The current session identifier may be the first session identifier determined when the first session is set up, may be the second session identifier generated by the server based on the received first update request, or may be a session identifier generated after a plurality of update requests. After receiving the current session identifier, the server finds the corresponding first session, to find information corresponding to the first session, that is, important information such as a working key and an encryption algorithm that are obtained through negotiation in a handshake when the first session is set up between the server and the client; and the server decrypts the service data in the application message based on the information.

According to a third aspect, an embodiment of the present invention provides a computer storage medium. The computer storage medium may be non-volatile. The computer storage medium stores a computer program that is used to implement the method according to any one of the first aspect or the implementations of the first aspect.

According to a fourth aspect, an embodiment of the present invention provides a session resumption apparatus. The apparatus includes a processor and a memory. The memory is configured to store a computer program, and the processor is configured to: read the computer program from the memory and enable the apparatus to implement the method according to any one of the first aspect or the implementations of the first aspect.

According to a fifth aspect, an embodiment of the present invention provides a computer storage medium. The computer storage medium may be non-volatile. The computer storage medium stores a computer program that is used to implement the method according to any one of the second aspect or the implementations of the second aspect.

According to a sixth aspect, an embodiment of the present invention provides a session resumption apparatus. The apparatus includes a processor and a memory. The memory is configured to store a computer program, and the processor is configured to: read the computer program from the memory and enable the apparatus to implement the method according to any one of the second aspect or the implementations of the second aspect.

According to a seventh aspect, an embodiment of the present invention further provides a session resumption apparatus, including one or more modules that can implement any one of the first aspect or the implementations of the first aspect, where each module may perform one or more steps.

According to an eighth aspect, an embodiment of the present invention further provides a session resumption apparatus, including one or more modules that can implement any one of the second aspect or the implementations of the second aspect, where each module may perform one or more steps.

### DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may derive other drawings from these accompanying drawings without creative efforts.
FIG. 1 is a schematic diagram of a typical networking mode of NB-IoT according to an embodiment of the present invention;
FIG. 2 is a schematic structural diagram of an NB-IoT device according to an embodiment of the present invention;
FIG. 3 is a schematic structural diagram of an IoT cloud platform according to an embodiment of the present invention;
FIG. 4 is a schematic diagram of abstract device forms of a client and a server in typical networking of NB-IoT according to an embodiment of the present invention;
FIG. 5 is a schematic diagram of a message exchange process between an NB-IoT device and an IoT cloud platform in a session resumption method according to an embodiment of the present invention;
FIG. 6 is a schematic diagram of content of a request message in a session resumption method according to an embodiment of the present invention;
FIG. 7 is a schematic diagram of an application message in a session resumption method according to an embodiment of the present invention;
FIG. 8 is a schematic structural diagram of a session resumption apparatus according to an embodiment of the present invention; and
FIG. 9 is a schematic structural diagram of a session resumption apparatus according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely some but not all of the embodiments of the present invention. The terms "first" and "second" in this application are merely intended for a purpose of description, and shall not be understood as an indication or implication of relative importance or an implicit indication of a quantity of indicated technical features. Therefore, a feature restricted by "first" or "second" may explicitly or implicitly include one or more such features. In the descriptions in the embodiments of the present invention, unless otherwise stated, "a plurality of' means two or more.

Apparatuses to which a session resumption method provided in this application is applicable may be client devices and servers thereof in various forms. The client devices include but are not limited to an NB-IoT device, a mobile terminal application APP, and the like. In the embodiments, only the NB-IoT device and a server thereof are used as examples to describe the session resumption method provided in the embodiments.

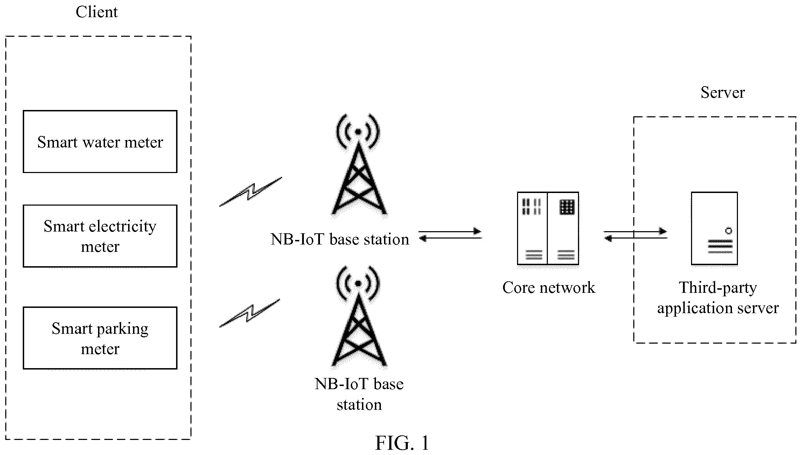

FIG. 1 is a typical networking mode of NB-IoT. In different actual application scenarios, an NB-IoT device may be a smart water meter, a smart electricity meter, a smart parking meter, or the like. The NB-IoT device encrypts service data, and then transparently transmits the encrypted service data to a third-party application server through an NB-IoT base station and a core network by using a chip of the NB-IoT device. As a server, the third-party application server decrypts the reported service data and performs related processing.

In this embodiment of the present invention, the NB-IoT device serves as a client, and an IoT cloud platform serves as a server.

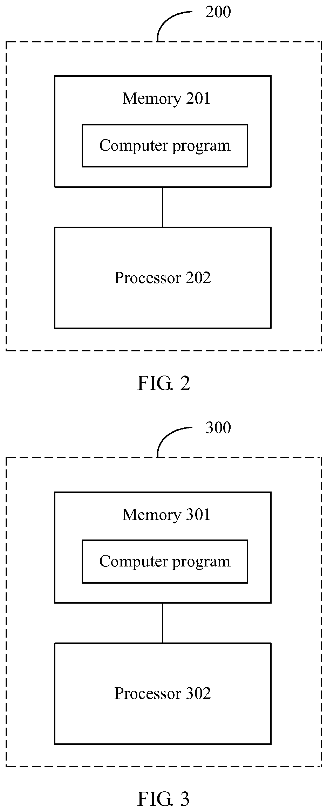

FIG. 2 is a schematic structural diagram of an NB-IoT device according to this embodiment.

The NB-IoT device 200 includes a memory 201 and one or more processors 202. The memory 201 is configured to store a computer program. The processor is configured to: read the computer program from the memory and enable the NB-IoT device 200 to implement the session resumption method provided in the embodiments.

FIG. 3 is a schematic structural diagram of an IoT cloud platform according to this embodiment.

The IoT cloud platform 300 includes a memory 301 and one or more processors 302. The memory 301 is configured to store a computer program. The processor is configured to: read the computer program from the memory and enable the IoT cloud platform 300 to implement the session resumption method provided in the embodiments.

Certainly, FIG. 3 is merely an example. In other embodiments, the cloud platform may be a set of a plurality of servers shown in FIG. 3.

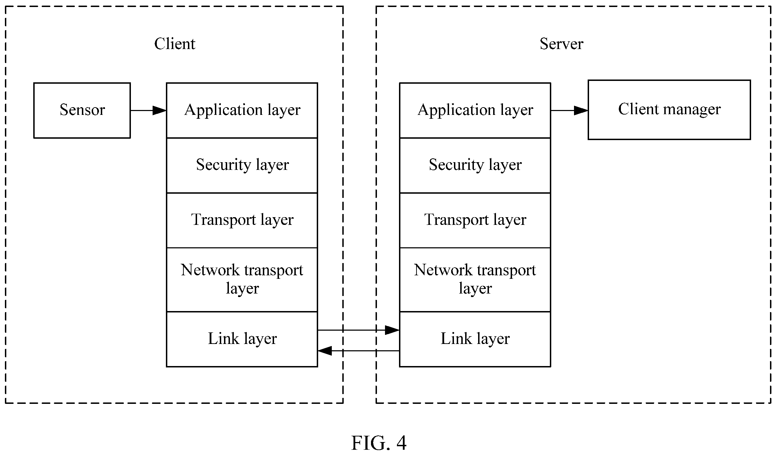

FIG. 4 is a schematic diagram of abstract device forms of the client and the server in the typical networking of the NB-IoT in FIG. 1. Because in the typical network mode, the NB-IoT base station and the core network do not process the service data and only transparently transmit the service data, the NB-IoT base station and the core network are omitted in FIG. 4. In FIG. 4, the client is on the left side. A sensor of the client sends obtained data to the server end by using a protocol stack. The protocol stack successively includes an application layer, a security layer, a network transport layer, and a link layer from top to bottom. A protocol layer related to this application is the security layer, and a protocol of the security layer is a TLS/DTLS protocol. The security layer is mainly used to encrypt the service data of the application layer and then transmit the encrypted service data to a lower-layer protocol.

Each time the NB-IoT device is powered off, information in a memory is lost. Therefore, a complete handshake session needs to be performed after power-on. However, when the NB-IoT device is woken up from sleep, session content stored in the memory is not lost. Therefore, session content obtained through negotiation in a previous handshake may be reused. However, when the NB-IoT device reports the service data to the IoT cloud platform, the IoT cloud platform cannot identify an identity of the NB-IoT device because an IP address and an IP port change. Therefore, according to the TLS and DTLS protocols, the NB-IoT device needs to perform at least five message exchanges with the IoT cloud platform, to resume a session obtained through negotiation in the previous handshake, so as to report the service data. However, in this embodiment of the present invention, the NB-IoT device and the IoT cloud platform do not need to perform a plurality of message exchanges during session resumption.

The session resumption method provided in the embodiments is applicable to the DTLS protocol and the TLS protocol. The TLS protocol and the DTLS protocol are respectively applicable to a lower-layer TCP protocol and a lower-layer UDP protocol, and are indistinctive in aspects such as key negotiation and session resumption. A method for implementing session resumption in the TLS protocol is the same as that in the DTLS protocol. Therefore, only the DTLS protocol is used as an example for description in the embodiments.

The following describes in detail how the NB-IoT device and the IoT cloud platform perform message exchange in the session resumption method provided in the embodiments of the present invention.

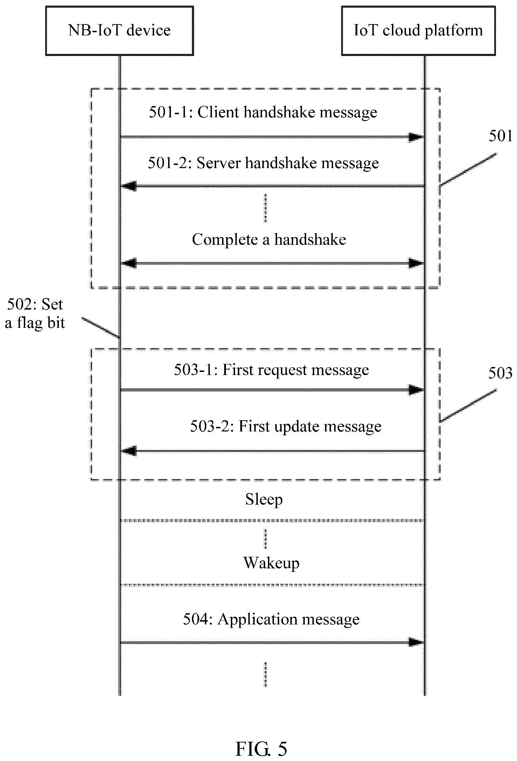

FIG. 5 shows a message exchange process between an NB-IoT device and an IoT cloud platform in a session resumption method according to an embodiment of the present invention.

Step 501. The NB-IoT device performs a complete handshake to set up a session with the IoT cloud platform, and stores a session identifier corresponding to the session.

After the NB-IoT device is powered on, the NB-IoT device first sets up a protocol-layer link connection to the IoT cloud platform, to be specific, sends an RRC Conn Setup message to the IoT cloud platform.

A message exchange process in which the NB-IoT device performs the complete handshake to set up the session with the IoT cloud platform is as follows:

Step 501-1. The NB-IoT device sends a handshake message to the IoT cloud platform, where the handshake message includes an added extended field.

A DTLS standard protocol allows a client and a server to add an extended field according to a related specification.

Specifically, in this embodiment, the handshake message sent by the NB-IoT device to the IoT cloud platform is a client_hello with EXTERN_RESUME extension, where the client_hello is a handshake message sent by the client when the client has a handshake with the server in the DTLS protocol. In this embodiment, an extended field is added to the client_hello message, and the extended field is EXTERN_RESUME, where a type is 36, a data length is 1 byte, and a value is 0. If the handshake message sent by the NB-IoT device includes the added EXTERN_RESUME extended field, it indicates that the NB-IoT device supports the session resumption method of this application.

Step 501-2. The IoT cloud platform sends a handshake message to the NB-IoT device, where the handshake message includes an extended field.

Specifically, in this embodiment, the handshake message sent by the NB-IoT device to the IoT cloud platform is a server_hello with EXTERN_RESUME extension, where the server_hello is a handshake message sent by the server when the server has a handshake with the client in the DTLS protocol. In this embodiment, an extended field is added to the server_hello message, and the extended field is EXTERN_RESUME, where a type is 36, a data length is 5 bytes, and data content is an effective time. The effective time occupies 4 lower-order bytes, and the most significant byte is 1. The server_hello message further includes the session identifier of this session. The effective time described above is an effective time of the session identifier, and the session identifier is effective within the effective time.

It should be noted that in this embodiment, the extended field EXTERN_RESUME has two functions: One function is that the extended field may indicate that both the NB-IoT device and the IoT cloud platform support the session resumption method provided in this application; and the NB-IoT device may determine, based on the extended field, to set a flag bit in a session context of a first session. The other function is that the extended field is used to indicate an effective time of a first session identifier. In another embodiment of the present invention, alternatively, another extended field may be added to indicate the effective time of the first session identifier.

After steps 501-1 and 501-2, the NB-IoT device and the IoT cloud platform complete subsequent interaction according to the DTLS standard protocol. Finally, the NB-IoT device and the IoT cloud platform complete a handshake and set up the session. The session includes important information such as a working key and an encryption algorithm that are obtained through negotiation between the NB-IoT device and the IoT cloud platform. The important information, the session identifier corresponding to the session, and the effective time of the session identifier are all stored in respective memories of the NB-IoT device and the IoT cloud platform, for subsequent encrypted communication.

The session and the session identifier corresponding to the session are stored in the respective memories of the NB-IoT device and the IoT cloud platform in any key-value pair storage manner. In key-value pair storage, each session and a unique session identifier corresponding to the session are stored in a one-to-one correspondence manner. For example, a linked list is a key-value pair storage manner. Each session corresponds to the unique session identifier of the session. The corresponding session can be found based on the session identifier by using the stored key-value pair, and important information such as a working key and an encryption algorithm of the session may also be obtained, to decrypt an encrypted message.

Step 502. The NB-IoT device sets a flag bit in a context of the session based on the extended field in the handshake message sent by the IoT cloud platform.

Specifically, if the handshake message sent by the IoT cloud platform to the NB-IoT device includes the EXTERN_RESUME extended field, it indicates that the IoT cloud platform supports the session resumption method of this application, and the flag bit is set in the context of the session to indicate that the IoT cloud platform supports the session resumption method of this application. Next, the subsequent process of the session resumption method described in this application proceeds. If the handshake message sent by the IoT cloud platform to the NB-IoT device does not include the EXTERN_RESUME extended field, it indicates that the IoT cloud platform does not support the session resumption method described in this application, and the flag bit is set in the context of the session to indicate that the IoT cloud platform does not support the session resumption method described in this application. Then, the NB-IoT device and the IoT cloud platform communicate with each other by using a method in the DTLS protocol. In this way, a normal information exchange is not affected.

Step 503. After sending a request message to the IoT cloud platform, the NB-IoT device receives an encrypted update message sent by the IoT cloud platform.

The following describes specific steps of step 503.

In this embodiment, in step 503-1, the NB-IoT device first searches for the flag bit, and after determining that the flag bit indicates that the IoT cloud platform supports the session resumption method described in this application, the NB-IoT device sends the request message to the IoT cloud platform within an effective time of the session identifier, where the request message is used to request to update the session identifier.

In another embodiment, the NB-IoT device may not perform step 502. Instead, after receiving the handshake message added with the extended field from the IoT cloud platform in step 501-2, the NB-IoT device determines, based on the extended field, to send the request message to the IoT cloud platform, where the request message is used to request to update the session identifier.

Specifically, the NB-IoT device requests, by sending the request message within the effective time of the session identifier, the IoT cloud platform to update the session identifier, where the request message is a client_hello with session_renewal message. The request message is obtained by adding an extended field to the client_hello. The extended field is EXTERN_RESUME, where a type is 36, a data length is 1 byte, and a value is 2.

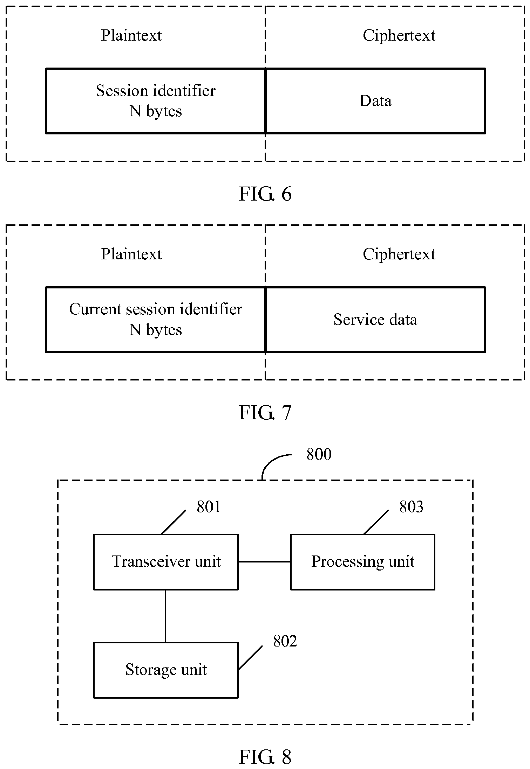

As shown in FIG. 6, content of the client_hello with session_renewal request message includes two parts. A first part is an N-byte session identifier in plaintext, and the identifier is included in a record layer of DTLS and is used by the IoT cloud platform to find, based on the session identifier, a session previously set up with the NB-IoT device. After decrypting a ciphertext in a second part by using a negotiated key in content of the session, the IoT cloud platform replies to the request message.

After receiving the client_hello with session _renewal sent by the NB-IoT device, the IoT cloud platform obtains the session identifier by parsing information in the record layer, finds the session that is corresponding to the session identifier and that is obtained through negotiation in the current handshake, and decrypts the ciphertext in the message by using the negotiated key in the content of the session. The IoT cloud platform generates a new session identifier corresponding to the session that is obtained through negotiation in the previous handshake. At the same time, the original session identifier is replaced by the new session identifier.

Step 503-2. The IoT cloud platform encrypts the new session identifier and an effective time of the session identifier, and sends the encrypted new session identifier and effective time to the NB-IoT device by using the update message.

Specifically, in this embodiment, the update message sent by the IoT cloud platform to the NB-IoT device is a server_hello with session_renewal_resp message, where the server_hello with session_renewal_resp message includes the encrypted new session identifier and the effective time of the session identifier. The update message is obtained by adding an extended field to the server_hello. The extended field is EXTERN_RESUME, where a type is 36, a data length is 5 bytes, and data content is the effective time of the new session identifier. The effective time occupies 4 lower-order bytes, and the most significant byte is 3.

After receiving the server_hello with session_renewal_resp message sent by the IoT cloud platform, the NB-IoT device identifies an identity of the IoT cloud platform based on an IP address and an IP port of the IoT cloud platform, and decrypts the message by using the key in the session obtained through negotiation in the current handshake, to obtain the new session identifier and the effective time of the session identifier. The NB-IoT device replaces the original session identifier with the new session identifier. The new session identifier becomes a unique session identifier corresponding to the session obtained through negotiation in the current handshake, namely, a current session identifier.

Through step 503 of updating a session identifier, an attacker can be further prevented from tracking user privacy by using a session identifier, thereby improving security of communication between the NB-IoT device and the IoT cloud platform.

In another embodiment, the NB-IoT device may perform step 503 one or more times to update the session identifier of the first session, thereby improving security of communication between the NB-IoT device and the IoT cloud platform.

When the NB-IoT device enters a sleep mode, the NB-IoT device disconnects the protocol-layer link connection, to be specific, receives an RRC Conn Release message sent by the IoT cloud platform.

When the NB-IoT device enters a wakeup mode and needs to report service data, the NB-IoT device needs to set up a protocol-layer link connection again, to be specific, sends an RRC Conn Setup message to the IoT cloud platform.

Step 504. The NB-IoT device sends an encrypted application message to the IoT cloud platform, and the IoT cloud platform resumes the current session after receiving the application message.

Specifically, as shown in FIG. 7, a format of the encrypted application message sent by the NB-IoT device to the IoT cloud platform includes two parts: A first part is an N-byte current session identifier in plaintext, and the current session identifier is included in the record layer of DTLS. A second part is a ciphertext and includes service data that needs to be uploaded. The current session identifier is a new session identifier. After receiving the encrypted application message, the IoT cloud platform obtains the current session identifier by parsing information in the record layer, identifies an identity of the NB-IoT device by using the current session identifier, finds the session that is corresponding to the current session identifier and that is obtained through negotiation in the current handshake, decrypts the second part by using the negotiated key in the content of the session, and reports the decrypted service data to an upper-layer protocol.

In this embodiment of the present invention, after step 504, after the NB-IoT device reports the service data and before the NB-IoT device enters the sleep mode again, step 503 may be performed one or more times again to update a session identifier corresponding to the session obtained through negotiation in the current handshake, to protect user privacy from being tracked by using the session identifier.

The NB-IoT device enters the sleep mode again after reporting the service data, and disconnects the protocol-layer link connection, to be specific, receives an RRC Conn Release message sent by the IoT cloud platform.

When the NB-IoT device is woken up again to upload service data, the NB-IoT device may still perform step 504 to resume the session with the IoT cloud platform to upload the service data.

In another embodiment of the present invention, step 504 is performed directly after step 501 and step 502.

Specifically, before the NB-IoT device sends the encrypted application message to the IoT cloud platform, the NB-IoT device first searches for the flag bit, and determines that the flag bit indicates that the IoT cloud platform supports the session resumption method described in this application. The current session identifier included in the application message is the original session identifier determined when the session is set up through handshake negotiation.

In another embodiment of the present invention, step 504 is performed after step 501.

Specifically, the NB-IoT device may determine, based on the extended field in the handshake message sent by the IoT cloud platform, to send the encrypted application message to the IoT cloud platform. In this case, the current session identifier included in the application message is the original session identifier determined when the session is set up through handshake negotiation.

FIG. 8 is a schematic structural diagram of a session resumption apparatus according to an embodiment of the present invention.

The apparatus 800 includes a transceiver unit 801, a storage unit 802, and a processing unit 803.

The transceiver unit 801 sends a handshake message to a peer end when the local end sets up a session with the peer end, where the handshake message includes an extended field. The extended field indicates that the local end supports a session resumption method of this application. The transceiver unit 801 receives a handshake message sent by the peer end, where the handshake message includes an extended field and a first session identifier corresponding to the session. The extended field is used to indicate an effective time of the first session identifier. The session set up between the local end and the peer end is referred to as a first session, and the first session identifier is a session identifier corresponding to the first session.

The storage unit 802 stores the first session identifier received by the transceiver unit 801 and the effective time of the first session identifier.

The processing unit 803 determines, based on the extended field in the handshake message sent by the peer end, to set a flag bit in a session context of the first session.

In an implementation of this embodiment, after the processing unit 803 sets the flag bit, the transceiver unit 801 may further send a first request message to the peer end to request to update the session identifier, before sending an application message to the peer end.

Specifically, the transceiver unit 801 sends the first request message to the peer end within the effective time of the first session identifier. The transceiver unit 801 receives a first update message sent by the peer end according to the first request message, where the first update message includes a second session identifier and an effective time of the second session identifier. The storage unit 803 updates the first session identifier corresponding to the first session to the second session identifier and stores the effective time of the second session identifier. In this case, a current session identifier is the second session identifier.

In this embodiment, before the transceiver unit 801 sends the first request message to the peer end, the processing unit 803 searches for the previously set flag bit, and determines, based on the flag bit, that the transceiver unit 801 needs to send the first request message to the peer end.

In another embodiment, the processing nit 803 determines, based on the extended field in the handshake message that is sent by the peer end and that is received by the transceiver unit 801, that the transceiver unit 801 needs to send the first request message to the peer end.

In another embodiment, the transceiver unit 801 may send the first request message to the peer end one or more times, to request to update the session identifier.

In another implementation of this embodiment, after the processing unit 803 sets the flag bit, the transceiver unit 801 may not update the session identifier, but directly sends the application message to the peer end. In this case, the current session identifier is the first session identifier. Before the local end sends the application message to the peer end, the processing unit 803 searches for the previously set flag bit, and determines, based on the flag bit, that the transceiver unit 801 needs to send the application message to the peer end.

The application message sent by the transceiver unit 801 to the peer end includes the current session identifier and service data, so that the peer end resumes the first session based on the current session identifier after receiving the application message.

In another embodiment, after the transceiver unit 801 sends the application message to the peer end, the transceiver unit 801 may send the first request message to the peer end one or more times, to request to update the session identifier.

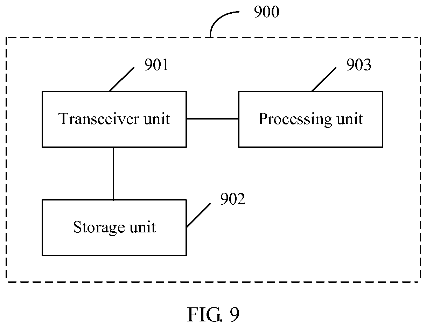

FIG. 9 is a schematic structural diagram of a session resumption apparatus according to an embodiment of the present invention.

A server 900 includes a transceiver unit 901, a storage unit 902, and a processing unit 903.

The transceiver unit 901 receives, when the local end sets up a session with a peer end, a handshake message sent by the peer end, where the handshake message includes an extended field. The extended field indicates that the peer end supports a session resumption method of this application. The transceiver unit 901 sends a handshake message to the peer end, where the handshake message includes a first session identifier and an extended field. The extended field is used to instruct the peer end to set a flag bit in a context of a first session, and is further used to indicate an effective time of the first session identifier. The session set up between the local end and the peer end is referred to as a first session, and the first session identifier is a session identifier corresponding to the first session.

The storage unit 902 stores the first session identifier and the effective time of the first session identifier.

In an implementation of this embodiment, the transceiver unit 901 receives an application message sent by the peer end.

Specifically, the transceiver unit 901 receives the application message sent by the peer end, where the application message includes a current session identifier and service data. In this case, the current session identifier is the first session identifier. The processing unit 902 finds the corresponding first session based on the current session identifier received by the transceiver unit 901, and processes the service data in the application message based on information corresponding to the first session.

In another implementation of this embodiment, before receiving the application message sent by the peer end, the transceiver unit 901 may further receive a first request message sent by the peer end for updating the session identifier.

Specifically, the transceiver unit 901 receives the first request message sent by the peer end within the effective time of the first session identifier. The processing unit 902 generates a second session identifier according to the first request message. The storage unit 902 updates the stored first session identifier corresponding to the first session to the second session identifier. The transceiver unit 901 sends a first update message to the peer end, where the first update message includes the second session identifier and an effective time of the second session identifier. In this case, the second session identifier is the current session identifier.

In another embodiment, before receiving the application message sent by the peer end, the transceiver unit 901 may receive a plurality of first request messages sent by the peer end, to perform session identifier update a plurality of times.

The transceiver unit 901 receives the application message sent by the peer end, where the application message includes the current session identifier and the service data. The processing unit 902 finds the corresponding first session based on the current session identifier received by the transceiver unit 901, and processes the service data in the application message based on information corresponding to the first session.

In another embodiment, after the transceiver unit 901 receives the application message sent by the peer end, the transceiver unit 901 may further receive a plurality of first request messages sent by the peer end, to perform session identifier update a plurality of times.

The described apparatus embodiments are merely examples. The units described as separate parts may or may not be physically separate, and parts displayed as units may or may not be physical units, may be located in one position, or may be distributed on a plurality of network units. Some or all the modules may be selected according to actual needs to achieve the objectives of the solutions of the embodiments. In addition, in the accompanying drawings of the apparatus embodiments provided in the present invention, connection relationships between modules indicate that the modules have communication connections with each other, and the connection may be specifically implemented as one or more communications buses or signal cables. A person of ordinary skill in the art may understand and implement the embodiments of the present invention without creative efforts.

Based on the foregoing descriptions of the embodiments, a person skilled in the art may clearly understand that the session resumption apparatus in the embodiments of the present invention may be implemented by software in addition to necessary universal hardware or by dedicated hardware only, including a dedicated integrated circuit, a dedicated CPU, a dedicated memory, a dedicated component, or the like. Generally, any functions that can be performed by a computer program can be easily implemented by using corresponding hardware. Moreover, a specific hardware structure used to achieve a same function may be of various forms, for example, in a form of an analog circuit, a digital circuit, a dedicated circuit, or the like.

The foregoing descriptions are merely some specific implementations of the present invention, but are not intended to limit the protection scope of the present invention.

## Claims

1. A session resumption method, comprising:
setting up, by a client, a first session with a server, and storing, by the client, a first session identifier corresponding to the first session; and
sending, by the client, an application message to the server, wherein the application message comprises a current session identifier and service data, so that the server resumes the first session based on the current session identifier after receiving the application message.

2. The method according to claim 1, before the sending, by the client, an application message to the server, further comprising:
sending, by the client, a first request message to the server, and receiving, by the client, a first update message sent by the server according to the first request message, wherein the first update message comprises a second session identifier, and the second session identifier is the current session identifier.

3. The method according to claim 2, wherein the setting up, by a client, a first session with a server comprises:
sending, by the client, a first client handshake message to the server, wherein the first client handshake message comprises an extended field; and
receiving, by the client, a first server handshake message returned by the server, wherein the first server handshake message comprises the first session identifier and an extended field.

4. The method according to claim 3, after the setting up, by a client, a first session with a server, further comprising:
determining, by the client based on the extended field in the first server handshake message, to set a flag bit in a session context of the first session.

5. The method according to claim 4, before the sending, by the client, a first request message to the server, further comprising: searching for, by the client, the flag bit, and determining, based on the flag bit, to send the first request message to the server.

6. The method according to any one of claims 3 to 5, wherein the extended field in the first server handshake message is used to indicate an effective time of the first session identifier.

7. The method according to any one of claims 2 to 6, wherein the client further stores the effective time of the first session identifier, and the client sends the first request message to the server within the effective time of the first session identifier.

8. The method according to any one of claims 2 to 7, wherein the first update message further comprises an effective time of the second session identifier.

9. The method according to any one of claims 2 to 8, after the receiving, by the client, the first update message sent by the server according to the first request message, further comprising:
updating, by the client, the first session identifier corresponding to the first session to the second session identifier.

10. The method according to claim 1, wherein the setting up, by a client, a first session with a server comprises:
sending, by the client, a first client handshake message to the server, wherein the first client handshake message comprises an extended field; and
receiving, by the client, a first server handshake message returned by the server, wherein the first server handshake message comprises the first session identifier and an extended field.

11. The method according to claim 10, after the setting up, by a client, a first session with a server, further comprising:
determining, by the client based on the extended field in the first server handshake message, to set a flag bit in a session context of the first session.

12. The method according to claim 11, before the sending, by the client, an application message to the server, further comprising:
searching for, by the client, the flag bit, and determining, based on the flag bit, to send the application message to the server, wherein the current session identifier in the application message is the first session identifier in this case.

13. A session resumption method, comprising:
setting up, by a server, a first session with a client, and storing, by the server, a first session identifier corresponding to the first session;
receiving, by the server, an application message sent by the client, wherein the application message comprises a current session identifier and service data; and
resuming, by the server, the first session based on the current session identifier.

14. The method according to claim 13, before the receiving, by the server, an application message sent by the client, further comprising:
receiving, by the server, a first request message sent by the client;
generating, by the server, a second session identifier according to the first request message, and updating the stored first session identifier corresponding to the first session to the second session identifier, wherein the second session identifier is the current session identifier; and
sending, by the server, a first update message to the client, wherein the first update message comprises the second session identifier.

15. The method according to claim 14, wherein the setting up, by a server, a first session with a client comprises:
receiving, by the server, a first client handshake message sent by the client, wherein the first client handshake message comprises an extended field; and
sending, by the server, a first server handshake message to the client, wherein the first server handshake message comprises the first session identifier and an extended field.

16. The method according to claim 15, wherein the extended field comprised in the first server handshake message is used to instruct the client to set a flag bit in a context of the first session.

17. The method according to claim 15 or 16, wherein the extended field in the first server handshake message is used to indicate an effective time of the first session identifier.

18. The method according to any one of claims 14 to 17, wherein the receiving, by the server, a first request message sent by the client comprises: receiving, by the server, the first request message sent by the client within the effective time of the first session identifier.

19. The method according to any one of claims 14 to 18, wherein the first update message further comprises an effective time of the second session identifier.

20. The method according to claim 13, wherein the setting up, by a server, a first session with a client comprises:
receiving, by the server, a first client handshake message sent by the client, wherein the first client handshake message comprises an extended field; and
sending, by the server, a first server handshake message to the client, wherein the first server handshake message comprises the first session identifier and an extended field.

21. The method according to claim 20, wherein the extended field comprised in the first server handshake message is used to instruct the client to set a flag bit in a context of the first session.

22. The method according to any one of claims 13 to 21, wherein the resuming, by the server, the first session based on the current session identifier comprises:
finding, by the server, the corresponding first session based on the received current session identifier, and processing the service data in the application message based on information corresponding to the first session.

23. A computer storage medium, wherein the computer storage medium may be non-volatile, and the computer storage medium stores a computer program that is used to implement the method according to any one of claims 1 to 12.

24. A session resumption apparatus, wherein the apparatus comprises a processor and a memory, the memory is configured to store a computer program, and the processor is configured to: read the computer program from the memory and enable the apparatus to implement the method according to any one of claims 1 to 12.

25. A computer storage medium, wherein the computer storage medium may be non-volatile, and the computer storage medium stores a computer program that is used to implement the method according to any one of claims 13 to 22.

26. A session resumption apparatus, wherein the apparatus comprises a processor and a memory, the memory is configured to store a computer program, and the processor is configured to: read the computer program from the memory and enable the apparatus to implement the method according to any one of claims 13 to 22.
